Europäisches Patentamt

European Patent Office

Office européen des brevets

(11) Veröffentlichungsnummer: **0 379 041**
**A1**

# (12) EUROPÄISCHE PATENTANMELDUNG

(21) Anmeldenummer: **90100397.0**

(22) Anmeldetag: **09.01.90**

(51) Int. Cl.⁵: **C02F 1/28**

(30) Priorität: **14.01.89 DE 3901006**

(43) Veröffentlichungstag der Anmeldung:
**25.07.90 Patentblatt 90/30**

(84) Benannte Vertragsstaaten:
**AT BE CH DE FR LI LU NL SE**

(71) Anmelder: **RHEINBRAUN Aktiengesellschaft**
**Stüttgenweg 2**
**D-5000 Köln 41(DE)**

(72) Erfinder: **Dolkemeyer, Wilfried, Dr.**
**Liebigstrasse 14**
**D-5047 Wesseling(DE)**
Erfinder: **Gierlich, Hans, Dr.**
**Buschdorfer Str. 37**
**D-5300 Bonn-Buschdorf(DE)**
Erfinder: **Poppe, Klaus, Dr.**
**Siegfriedstrasse 9**
**D-5030 Hürth(DE)**
Erfinder: **Schmidt, Karin, Dr.**
**Friedensweg 53**
**D-5047 Wesseling(DE)**

(74) Vertreter: **Koepsell, Helmut, Dipl.-Ing.**
**Mittelstrasse 7**
**D-5000 Köln 1(DE)**

(54) **Verfahren zur Entfernung von anorganischen Verunreinigungen aus Flüssigkeiten.**

(57) Das erfindungsgemäße Verfahren betrifft die Entfernung von gelösten Verunreinigungen aus Flüssigkeiten, insbesondere Abwasser, durch Behandeln derselben mit Braunkohlenkoksen und/ oder Aktivkohlen aus Braunkohle.

EP 0 379 041 A1

## Verfahren zur Entfernung von anorganischen Verunreinigungen aus Flüssigkeiten

Das erfindungsgemäße Verfahren betrifft die Entfernung von gelösten Verunreinigungen aus Flüssigkeiten, insbesondere Abwasser, durch Behandeln derselben mit Braunkohlenkoksen und/oder Aktivkohlen aus Braunkohle.

Die Verwendung von Koksen und Aktivkohlen zur Abwasserreinigung ist seit langem bekannt. So werden beispielsweise Koks und Aktivkohle als Filtermasse zum Abscheiden feinverteilter Feststoffe in Abwasser eingesetzt.

Kokse und Aktivkohlen eignen sich auch als Adsorbens für gelöste organische Verunreinigungen.

So wird in "Herdofenkoks aus Braunkohle - konventionelle Einsatzgebiete und zukünftige Einsatzmöglichkeiten" in Erdöl, Erdgas, Kohle, 102 S. 143/144 (1986) die Verwendung von Braunkohlenkoks für diesen Zweck beschrieben. Braunkohlenkoks eignet sich gemäß dieser Veröffentlichung auch sehr gut als Zusatz zu biologischen Kläranlagen, da sich Kompaktflocken mit der Biomasse bilden mit verbesserten Sedimentationseigenschaften. Ein besonderes Problem der Abwasserreinigung stellt die Entfernung anorganischer Verunreinigungen, insbesondere von gelösten Metallverbindungen dar.

Von den zahlreichen bekannten Verfahren können nur einige beispielhaft zitiert werden.

So wird in der EP 0 110 240 ein Verfahren beschrieben, gemäß dem Kupfer und Zink enthaltendes Abwasser mit anaerobem Schlamm behandelt wird. Nach dieser Methode können 92 % an Kupfer und 90 % an Zink entfernt werden.

Geht man also beispielsweise von einem Abwasser mit einem Gehalt von 7 mg/l Kupfer aus, so verbleiben im Abwasser 0,56 mg. Bei 70 mg/l würden demgemäß 5,6 mg Kupfer im Abwasser verbleiben. Analoges gilt für Zink. Mit dieser Methode wird demgemäß der erwünschte Reinigungsgrad nicht erreicht.

Eine interessante Methode wird in DE-PS 30 26 430 offenbart. Hier wird Konverterschlacke aus der Eisenindustrie in einer Teilchengröße von ca. 0,15 mm eingesetzt.

Wie aus Tabelle 4 der Patentschrift hervorgeht, lassen sich mit 1 g Schlacke 4 mg Quecksilber binden. Setzt man ausreichende Mengen an Schlacke ein, so kann man Hg bis zur Nachweisgrenze von < 0,001 ppm entfernen.

Es ist allerdings erforderlich, bei einem pH < 2 zu arbeiten. Es müssen demgemäß erhebliche Mengen an Säure wie beispielsweise HCl oder $H_2SO_4$ eingesetzt werden.

Die Untersuchungen zur Entfernung von Cd, Pb, Cr und Arsen zeigen, daß hier trotz des Einsatzes der genannten Schlackenmengen erheblich höhere Konzentrationen an Metallen im gereinigten Abwasser verbleiben als im Falle des Quecksilbers. Geht man von einem nur gering mit Hg belasteten Abwasser aus, das 10 mg Hg/l Wasser enthält, so muß nach diesem Verfahren bei einer relativ kleinen Menge von 1000 $m^3$ Abwasser bereits 1 t Schlacke eingesetzt werden und eine entsprechend große Menge an Säure. Auch die Korngröße der Schlacke von 0,15 mm belastet die Wirtschaftlichkeit des Verfahrens. Zudem ist bei Einsatz der Schlacke mit dieser Korngröße ein Rühr- oder sonstiger Mischreaktor erforderlich.

Ein weiteres Verfahren, in dem mit sekundären Aminen und Schwefelkohlenstoff vorbehandelte Aktivkohle eingesetzt wird ist in DE-OS 30 20 608 offenbart.

In der DE-OS 34 38 140 wird ein Verfahren beschrieben, gemäß dem Metalle durch Zusatz einer Natriumaluminatlösung ausgefällt werden. Zusätzlich muß ein Polyelektrolyt zugesetzt werden und anschließend müssen die schwer filtrierbaren ausgefällten Metallhydroxide abgetrennt werden.

Die EP-A-0 156 059 beschreibt die Fällung von Metallen als Metallphosphate.

In Anbetracht der Entwicklung im Abwasserbereich wird es immer dringender, verbesserte Verfahren zu entwickeln, die auf wirtschaftliche Weise und mit hoher Selektivität die gelösten Verunreinigungen, die sowohl für Pflanzen als auch Tier und Mensch teilweise außerordentlich schädlich sind, aus Wasser in dem sie enthalten sind, zu entfernen. Es kann sich hierbei sowohl um Industrieabwässer, als auch um Oberflächengewässer schlechthin, wie Fluß-, Teich-, See- und auch Meerwasser sowie insbesondere um Grundwasser handeln. So sind Deponiesickerwässer, wie allgemein bekannt ist, zu einem zunehmenden Risiko für das Grundwasser geworden.

Der Anmelderin ist es nunmehr gelungen ein Verfahren zu entwickeln, mit dem auf sehr wirtschaftliche Weise gelöste Metall-und Phosphat-Ionen bis zur Nachweisgrenze abgetrennt werden können, dadurch gekennzeichnet, daß aus Braunkohlen hergestellte(r) Koks und/oder Aktivkohle zur Entfernung der in der Flüssigkeit enthaltenen Ionen verwendet werden.

Braunkohlen entstammen bekanntlich überwiegend dem Tertiär und sind demgemäß vergleichsweise geologisch junge Kohlen mit niedrigem Inkohlungsgrad. Sie sind reich an bituminösen Stoffen wie Huminsäuren, die sich in Alkalilauge mit tiefbrauner Farbe lösen.

Sie können bis zu 65 Gew.-% Wasser enthalten und werden gewöhnlich im Tagebau auf sehr wirtschaftliche Weise mit Schaufelbaggern abgebaut. Aus Braunkohle kann man auf verschiedene Weise Kokse herstellen.

Beispiele sind der durch Schwelen bei ca. 600 °C gewinnbare sog. Grudekoks; durch Verkoken bei 1000 - 1200 °C erhält man den sog. Braunkohlen-Hochtemperaturkoks mit einer spezifischen Oberfläche von etwa 75 - 250 m²/g.

Ein weiterer durch seine Härte und Druckfestigkeit sehr wertvoller Braunkohlenkoks ist der sog. Herdofenkoks mit einer spezifischen Oberfläche von 250-350 m²/g.

Bei der Verkokung im Herdofen wird feingemahlene und vorgetrocknete Braunkohle über Fallrohre am Außenrand der Herdofenplatte aufgegeben und wandert unter deren ständiger Drehung und der Einwirkung der feststehenden Rührschaufeln langsam zur Mitte, von wo aus der fertige Koks ausgetragen wird. Beim Durchgang treten die flüchtigen Bestandteile aus der Braunkohlen-/Koksschüttung aus und werden unter Luftzufuhr von außen oberhalb der Koksschüttung teilweise verbrannt. Der Verkokungsprozeß wird über diese Verbrennung eines Teiles der flüchtigen Bestandteile geführt, das heißt, es wird unter Luftmangel gearbeitet, so daß jeweils nur eine solche Menge an flüchtigen Bestandteilen verbrennt, wie zur Aufrechterhaltung der Verkokungstemperatur benötigt wird. Das Verkoken von Braunkohle im Herdofen erfolgt im allgemeinen ohne Zufuhr von Wasserdampf oder Wasser von außen, da der Wassergehalt der vorgetrockneten Braunkohle so eingestellt werden kann, daß Koks mit den gewünschten Eigenschaften erhalten wird. Erfindungsgemäß besonders bewährt hat sich aus rheinischer Braunkohle hergestellter Herdofenkoks. Die genannten Braunkohlenkoksqualitäten sind beispielhaft, jedoch nicht als limitierend anzusehen.

Aktivkohlen oder aufgrund ihrer großen Oberfläche auch Adsorptionskohlen genannt, werden häufig aus Holz gewonnen, jedoch auch Braunkohle ist ein geeignetes Ausgangsmaterial.

Es gibt zahlreiche Verfahren zur Herstellung von Aktivkohlen. Beispielhaft seien Schwelverfahren mit anschließender Behandlung mit Wasserdampf, Erhitzen von fein verteilten Einsatzmaterialien in Gegenwart von oxidierenden Gasen in der Wirbelschicht, Behandeln von verkohlter Substanz mit auf ca. 1000 °C überhitztem Wasserdampf u.a. genannt,

Aktivkohlen, die nach diesem oder anderen Verfahren aus Braunkohle hergestellt sind und auch ggfs. auf dem Markt erhältlich sind, eignen sich für das erfindungsgemäße Verfahren.

Vor der Behandlung der die Verunreinigungen enthaltenden Flüssigkeit mit dem aus Braunkohle hergestellten Koks und/oder der Aktivkohle werden Koks bzw. Aktivkohle vorteilhafterweise entgast, d.h. daß an der Oberfläche bzw. in den Poren haftende Gas, im allgemeinen Luft, wird zumindest teilweise jedoch bevorzugt möglichst vollständig entfernt. Dies geschieht in einer bervorzugten Ausführungsform durch Evakuieren. Das Evakuieren kann auf die Weise erfolgen, daß an den den Koks und/oder die Aktivkohle enthaltenden Behälter Vakuum angelegt wird und daß man anschließend die Flüssigkeit, vorzugsweise Wasser in den Koks bzw. die Aktivkohle strömen läßt. Man kann jedoch auch zunächst den Koks und/oder die Aktivkohle mit der Flüssigkeit benetzen bzw. bedecken und anschließend Vakuum anlegen.

Das Entfernen des an dem Koks bzw. der Aktivkohle haftenden Gases ist eine wichtige bevorzugte Ausführungsform der vorliegenden Erfindung, wie aus den durchgeführten Versuchen hervorgeht, obgleich auch nicht entgaster Koks gute Ergebnisse ergibt (Versuch Nr. 37). Sehr vorteilhaft kann die Entgasung durch Behandeln mit Dampf oder heißem Wasser oder beidem sein, auch in Kombination mit einer Entgasung durch Evakuieren. Ebenso kann die Entgasung und Mischung mit Wasser in der Weise erfolgen, daß fein verteilter Koks oder Aktivkohle in den Wasserstrahl einer Wasserstrahlpumpe eingesaugt werden.

Die zu reinigende Flüssigkeit ist selbstverständlich bevorzugt Wasser. Es ist allgemein bekannt, daß die Entfernung bestimmter Schwermetallionen aus Wasser ein vordringliches Umweltproblem geworden ist. Jedoch kann das erfindungsgemäße Verfahren auch für Gemische von Wasser mit anderen in Wasser löslichen Flüssigkeiten mit Vorteil angewandt werden, wie z.B. mit Alkoholen, Ketonen, organischen Säuren und anderen aciden Verbindungen und dergl. Schließlich ist das Verfahren auch dann anwendbar, wenn solche oder auch nicht in Wasser lösliche Flüssigkeiten von gelösten Metallionen befreit werden sollen.

Ein besonderer Vorteil von Braunkohlenkoks ist die Verfügbarkeit desselben und die hohe Wirtschaftlichkeit. Dies gilt insbesondere für Herdofenkoks, der um wenigstens einen Faktor 10 preisgünstiger ist als Aktivkohle.

Das Verfahren ist für nahezu alle Metallionen anwendbar. Be sonders geeignet ist es jedoch zur Entfernung der als toxisch eingestuften Schwermetallionen wie z.B. des Quecksilbers, Cadmiums, Zinks, Kupfers, Bleis, Chroms, Kobalts, Nickels, Vanadiums, Zinns, Galliums, Indiums und Thalliums, jedoch auch für Metallionen wie die des Eisens, Molybdäns, Wolframs, Mangans und von Kationen des Arsens, Antimons und Wismuts, sowie der seltenen Erden, radioaktiven Metalle und der Edelmetalle. Die Metallionen können als Einzelelemente oder im Gemisch vorliegen.

Das Verfahren ist auch für die Entfernung von Phosphat-Ionen sehr gut geeignet, insbesondere solchen, wie sie durch Waschmittel in Abwasser oder andere Wässer gelangen.

Das Verfahren ist auf sehr einfache Weise durchführbar, indem man das zu reinigende Wasser mit dem Koks und/oder der Aktivkohle in der Weise in Kontakt bringt, daß man Koks bzw. Aktivkohle als festes Bett anordnet und das Wasser über dieses mit einer bestimmten Verweilzeit fließen läßt. Hierbei kann das Wasser von unten nach oben durch das Bett gedrückt werden oder von oben nach unten durch dasselbe fließen. Auch ein wanderndes Festbett, ein Wirbelbett und andere Formen des Kontaktes zwischen Flüssigkeit und Adsorptionsmitteln sind möglich, wie beispielsweise im Suspensionsbett.

Bei der Reinigung von Metallionen enthaltendem Wasser wird bevorzugt bei einem pH von > 4 und besonders bevorzugt bei einem pH von > 5 in der zu reinigenden Flüssigkeit, insbesondere in Wasser gearbeitet. Der pH kann jedoch auch niedriger oder höher sein. Der pH in der gereinigten Flüssigkeit wird jedoch nicht während der ganzen Reinigungsperiode auf diesen Werten gehalten, sondern man läßt den pH während des Reinigungsbetriebs auf höhere Werte wie beispielsweise auf 8, ansteigen. Jedoch auch höhere pH-Werte sind möglich.

Grundsätzlich kann Koks oder Aktivkohle erfindungsgemäß mit sehr unterschiedlichen Korngößen eingesetzt werden, wie z.B. von > 0 bis 100 mm. Aus technischen und wirtschaftlichen Gründen sind jedoch bestimmte Korngrößen bevorzugt, nämlich > 0,01 bis 20 mm und besonders bevorzugt von > 0,01 - 10 mm. Übliche Feinkokssorten liegen z.B. etwa zwischen 1,2 - 5 mm, Feinstkokssorten zwischen 0,1 - 1,5 mm. Alle diese Korngrößen, auch Koksstäube sind einsetzbar und liefern sehr gute Ergebnisse. Es ist zu berücksichtigen, daß die Korngrößen in zerkleinerten und gesiebten Produkten einer Gaus'schen Verteilung unterliegen, d.h. eine mittlere Korngröße in den angegebenen Grenzen überwiegt, jedoch in kleinen Mengen liegen auch kleinere und größere Körnungen vor.

Im praktischen Einsatz kann es von Vorteil sein, im unteren Bett große Korngrößen zu verwenden bis zu 100 mm, jedoch im oberen Teil kleine Korngrößen. Auch die umgekehrte Anordnung kann gfs. von Wichtigkeit sein, daß ein Teil der Verunreinigungen im oberen groben Teil abgefangen wird und die restlichen Verunreinigungen im feinkörnigen unteren Teil.

Die Verweilzeit des zu reinigenden Wassers bzw. der Flüssigkeit sollte 1 - 300 min. betragen, bevorzugt 5 - 180 min. und besonders bevorzugt 10 - 120 min. Grundsätzlich können auf Kosten der Wirtschaftlichkeit des Verfahrens auch wesentlich längere Verweilzeiten angewandt werden.

Von den Braunkohlekoksen ist der Herdofenkoks erfindungsgemäß bevorzugt. Dieser ist sehr preiswert verglichen mit anderen Koksarten und mit Aktivkohle und zeigt hervorragende Adsorptionseigenschaften für die genannten Metalle.

Nach Beladung mit den metallischen oder sonstigen Verunreinigungen kann der Koks deponiert werden oder verbrannt werden, wobei die Metalle aus der Asche gegebenenfalls zurückgewonnen werden können.

Herdofenkoks wird im allgemeinen als sog. Feinkoks mit einer Korngröße von 1,25 - 5 mm, als Feinstkoks mit einer Korngröße von 0,1 - 1,5 mm und als Koksstaub mit einer Korngröße von < 0,4 mm gehandelt.

Sämtliche Korngrößen können erfindungsgemäß wie bereits dargelegt, einzeln oder als Gemische eingesetzt werden, wobei jedoch bei Einsatz von Koksstaub allein ebenfalls vorzugsweise mit dem Wasser eine innige Vermischung durch beispielsweise Rühren erfolgen sollte.

Beladener Koks bzw. beladene Aktivkohle kann ggfs. auch regeneriert werden, wie z. B. im Falle der Beladung mit Hg, Cd u.a. durch thermische Desorption, aber auch durch chemische Umsetzung.

Zur weiteren Erläuterung der vorliegenden Erfindung dienen folgende Versuche:
(In allen gereinigten Wasserproben wurde der Restgehalt durch Atomabsorptionsspektroskopie bzw. Ionenchromatographie bestimmt. Als Herdofenkoks wurde ein Produkt aus Rheinischer Braunkohle eingesetzt).

Die in den Tabellen zusammengestellten Versuche wurden im allgemeinen in der Weise durchgeführt, daß

in eine Säule aus Glas (Durchmesser 1,8 cm), die mit einem Siebboden ausgestattet war, 15 g Herdofenkoks der Korngröße 0,1 - 1,5 mm eingefüllt wurden (Füllhöhe 11 cm). Die Säule wurde mit Leitungswasser aufgefüllt und bei 18 - 20 mm auf Wasserstrahlvakuum evakuiert (Evakuierungsdauer 15 min.). Das Koksvolumen betrug 30 cm.

Oder es wurde der feinverteilte Koks mittels einer Wasserstrahlpumpe eingesaugt und mit Wasser vermischt. Anschließend ließ man den Koks absitzen. Auch die Methode der Behandlung mit heißem Dampf wurde in einigen Fällen, insbesondere bei den größeren Geräten eingesetzt. So wurde beispielsweise Versuch 7 in der Weise durchgeführt, daß das zu reinigende Grundwasser über einen mit Herdofenkoks gefüllten Behälter geleitet wurde, der mehrere m³ Koks enthielt und als Vorbehandlung mit Dampf erhitzt und anschließend mit heißem Wasser aufgefüllt wurde. Für die technische Durchführung des erfindungsgemäßen Verfahrens eignet sich das in der deutschen Patentanmeldung Nr. P 38 23 127.1 von der gleichen Anmelderin angemeldete Verfahren. Kennzeichnendes Merkmal der vorliegenden Erfindung ist jedoch nicht die apparative Durchführung, sondern der Einsatz von Koksen und Aktivkohle auf Braunkohlebasis.

4

Ein filtriertes Abwasser mit 25 mg $Cd^{++}$ als Cadmiumacetat pro Liter und einem pH von 5,3 wurde zur Reinigung eingesetzt. Die Versuche erfolgten bei Raumtemperatur und Normaldruck. Der Durchsatz pro Stunde betrug 30 ml (Verweilzeit: 1 Stunde). Nach 110 - 260 Stunden wurden der Versuch abgebrochen und das gereinigte Wasser analysiert. Nach diesen Versuchszeiten waren die Koksfüllungen noch nicht erschöpft. Die Analysen wurden jeweils zum Ende der angegebenen Laufzeiten gezogen, so daß die Restkonzentration an Metallen im gesamten gereinigten Abwasser noch niedriger lag als in der rechten Spalte angegeben.

Tabelle 1

| | | Konzentration mg/l | Koksvolumen ml | Koksmenge g | Korngröße mm | Verweilzeit/min. | pH | Versuchsdauer h | Konz. nach Reinigung ppm |
|---|---|---|---|---|---|---|---|---|---|
| | Versuche mit entgastem Herdofenkoks aus Braunkohle Einfluß von Korngröße und Koksvolumen | | | | | | | | |
| Vers. Nr. | | | | | | | | | |
| 1 | $Cd^{++}$ (Cd(Oac)$_2$) | 25 | 30 | 15 | 0,1 - 1,5 | 60 | 5,3 | 110 | < 0,002 ppm |
| 2 | $Cd^{++}$ (Cd(Oac)$_2$) | 25 | 30 | 15 | 1,25 - 5 | 60 | 5,3 | 110 | < 0,002 ppm |
| 3 | $Cd^{++}$ (Cd(Oac)$_2$) | 25 | 30 | 15 | 60 Gew.-% 1,25 - 5 40 Gew.-% < 0,4 | 60 | 5,3 | 110 | < 0,001 ppm |
| 4 | $Cd^{++}$ (Cd(Oac)$_2$) | 25 | 10.000 | 5.000 | 1,25 - 5 | 40 | 5,3 | 240 | < 0,002 ppm |

## Tabelle 2    Einfluß der Metallionenart (Herdofenkoks entgast)

| Vers. Nr. | | Konzentration mg/l | Koksvolumen ml | Koksmenge g | Korngröße mm | Verweilzeit/min. | pH | Versuchsdauer h | Konz. nach Reinigung ppm |
|---|---|---|---|---|---|---|---|---|---|
| 5 | $Cd^{++}$ $(Cd(Oac)_2)$ | 25 | 30 | 15 | 0,1 – 1,5 | 60 | 5,3 | 120 | < 0,002 |
| 6 | $Zn^{++}$ $(ZnCl_2)$ | 62 | 60 | 30 | 0,1 – 1,5 | 60 | 5,6 | 120 | < 0,1 |
| 7 | $Zn^{++}$ $(ZnCl_2)$ | 16 in verunreinigtem Grundwasser | 30 | 15 | 0,1 – 1,5 | 60 | 6,0 | 120 | < 1 |
| 8 | $Cu^{++}$ $(CuCl_2)$ | 25 | 30 | 15 | 0,1 – 1,5 | 60 | 5,6 | 120 | < 0,1 |
| 9 | $Pb^{++}$ $(Pb(Oac)_2)$ | 25 | 30 | 15 | 0,1 – 1,5 | 60 | 5,6 | 120 | < 0,01 |
| 10 | $Hg^{++}$ $(Hg(Oac)_2)$ | 110 | 30 | 15 | 0,1 – 1,5 | 60 | 5,7 | 120 140 | < 0,0005 |
| 11 | $Hg^{++}$ $(Hg(Oac)_2)$ | 32 | 30 | 15 | 0,1 – 1,5 | 60 | 6,0 | 140 | < 0,0005 |
| 12 | $Cd^{++}$ $(CdCl_2)$ | 16 | 30 | 15 | 0,1 – 1,5 | 60 | 5,7 | 140 | < 0,0005 |
| 13 | $Pb^{++}$ $(Pb(Oac)_2)$ | 25 | 30 | 15 | 0,1 – 1,5 | 60 | 5,7 | 140 | < 0,002 |

Fortsetzung auf der nächsten Seite!

**Tabelle 2** (Fortsetzung)

| Vers. Nr. | | Konzentration mg/l | Koksvolumen ml | Koksmenge g | Korngröße mm | Verweilzeit/min. | pH | Versuchsdauer h | Konz. nach Reinigung ppm |
|---|---|---|---|---|---|---|---|---|---|
| 14 | $Ni^{++}$ $(Ni(Oac)_2)$ | 25 | 30 | 15 | 0,1 – 1,5 | 60 | 5,6 | 120 | < 0,1 |
| 15 | $Cr^{+++}$ $(CrCl_3)$ | 30 | 30 | 15 | 0,1 – 1,5 | 60 | 5,6 | 120 | < 0,1 |
| 16 | $V^{+++}$ $(VCl_3)$ | 34 | 30 | 15 | 0,1 – 1,5 | 60 | 5,6 | 120 | < 0,01 |
| 17 | $Co^{++}$ $(CoCl_2)$ | 25 | 30 | 15 | 0,1 – 1,5 | 60 | 6,1 | 120 | < 0,1 |
| 18 | $Sn^{++}$ $(SnCl_2)$ | 27 | 30 | 15 | 0,1 – 1,5 | 60 | 5,9 | 120 | < 0,01 |
| 19 | $In^{+++}$ $(InCl_3)$ | 44 | 30 | 15 | 0,1 – 1,5 | 60 | 5,9 | 120 | < 0,1 |
| 20 | $UO_2^{++}$ $(UO_2(NO_3)_2 \cdot 6H_2O)$ | 15 | 30 | 15 | 0,1 – 1,5 | 60 | 6,0 | 120 | < 0,001 |
| 21 | $As^{+++}$ $(AsCl_3/HCl)$ | 23 | 30 | 15 | 0,1 – 1,5 | 60 | 6,0 | 120 | < 0,001 |
| 22 | $Mo^{+++}$ $(MoCl_3/HCl)$ | 26 | 30 | 15 | 0,1 – 1,5 | 60 | 6,0 | 120 | < 0,1 |
| 23 | $Ce^{+++}$ $(CeCl_3)$ | 44 | 30 | 15 | 0,1 – 1,5 | 60 | 5,7 | 120 | < 0,001 |
| 24 | $Ag^{+}$ | 21 | 30 | 15 | 0,1 – 1,5 | 60 | 5,8 | 120 | < 0,001 |
| 24a | $Mn^{++}$ $(MnCl_2 \cdot 4H_2O)$ | 40 | 30 | 15 | 0,1 – 1,5 | 60 | 5,3 | 120 | < 0,001 |

Die in Tabelle 1 angegebenen Ergebnisse zeigen, daß die Korngröße des eingesetzten Herdofenkokses nur einen geringen Einfluß auf das Versuchsergebnis hat.

In Tabelle 2 sind Versuche mit zahlreichen Metallionen in wässriger Lösung zusammengefaßt.

Es wurde in nahezu allen Versuchen zum besseren Vergleich mit einer Verweilzeit von 1 Stunde gearbeitet.

8

Die Ergebnisse zeigen, daß das erfindungsgemäße Verfahren in sehr weitem Umfang anwendbar ist, wobei die angegebenen Versuche nicht als limitierend anzusehen sind.

Tabelle 3

| Vers. Nr. | | Koksvolumen ml | Korngröße mm | Verweilzeit/min. | Versuchsdauer/h | Konz. nach Reinigung |
|---|---|---|---|---|---|---|
| | Einfluß der Koks- bzw. Aktivkohleart |
| | 25 mg $Cu^{++}$/l ($CuCl_2$) (entgast) |
| 25 | Herdofenkoks (Braunkohlebasis) spez. Oberfläche 250-350 $m^2$/g | 30 | 0,1 - 1,5 | 60 | 260 | < 0,1 ppm |
| 26 | Steinkohlenkoks spez. Oberfläche 5 - 25 $m^2$/g | 30 | 0,1 - 1,5 | 60 | 20 | Anstieg auf 7,6 mg/l 14 h 0,2 $mgCu^{++}$/l |
| 27 | Aktivkohle (aus Holz) spez. Oberfläche 1200-1800 $m^2$/g | 30 | 0,1 - 1,5 | 60 | 26 | 5 mg/l |
| 28 | Aktivkohle/Hydraffin (aus Braunkohle/Fa. Lurgi) spez. Oberfl. 600-1200 $m^2$/g | 30 | 0,1 - 1,5 | 60 | 90 | < 0,1 ppm |
| 29 | Hochtemperatur-Braunkohlenkoks spez. Oberfl. 200-250 $m^2$/g | 30 | 0,1 - 1,5 | 60 | 120 | < 1 ppm |
| 30 | Tieftemperatur (DDR-Koks) spez. Oberfl. 20-120 $m^2$/g | 30 | 0,1 - 1,5 | 60 | 120 | < 1 ppm |

EP 0 379 041 A1

Die Versuche in Tabelle 3 wurden wie die in den Tabellen 1 und 2 angegebenen Versuche durchgeführt, jedoch wurden verschiedene Koksarten bzw. Aktivkohlen eingesetzt.

Es wurde ein $CuCl_2$ enthaltendes Abwasser mit 25 mg $Cu^{++}$/1 eingesetzt.

Versuch 25 mit Herdofenkoks aus Rheinischer Braunkohle ergab auch nach 260 Stunden Laufzeit eine $Cu^{++}$ Menge im gereinigten Abwasser von < 0,1 ppm.

Steinkohlenkoks (Versuch 26) ergab nach 14 h 0,2 mg/l und bei 20 h einen schnellen Anstieg auf 7,6mg/l. Der Versuch wurde nach 20 h abgebrochen.

Bei Hochtemperatur-Braunkohlenkoks (DDR) wurde bis zu 120 h ein Wert von < 1 ppm erhalten. Das gleiche Ergebnis wurde mit Tieftemperaturkoks (DDR) erhalten (Versuche 29 und 30).

Sehr gute Ergebnisse wurden mit einer Lurgi-Aktivkohle auf Braunkohlebasis erhalten. Erst nach 90 h Versuchsdauer wurde ein Anstieg auf > 0,1 ppm festgestellt. Wesentlich schlechtere Ergebnisse wurden dagegen mit einer Aktivkohle auf Holzbasis erhalten (Versuch 27). Nach 26 h erfolgte ein Durchbruch auf 5 mg/l.

Die Ergebnisse zeigen die sehr guten Eigenschaften von Braunkohlekoksen und -Aktivkohle und unter denselben die herausragenden Eigenschaften von Herdofenkoks aus rheinischer Braunkohle.

Tabelle 4

| Versuch Nr. | Einfluß der Vorbehandlung auf Herdofenkoks, entgast | | |
|---|---|---|---|
| | 25 mg $Cu^{2+}$ ($CuCl_2$), Korngröße 0,1 - 1,5 mm, Verweilzeit 60 min. | | |
| | | Konzentration nach Reinigung, ppm | Versuchsdauer h |
| 31 | Evakuieren anschließend Wasserzugabe | < 0,1 | 260 |
| 32 | Evakuieren unter Wasser | < 0,1 | 260 |
| 33 | Dämpfen mit Dampf bei ° C | < 0,1 | 260 |
| 34 | Behandlung mit kochendem Wasser | < 0,1 | |
| 35 | Einsaugen und Mischen mit Wasser mittels einer Wasserstrahlpumpe | < 0,1 | 260 |
| 36 | ohne Vorbehandlung | < 0,1 | 110 |
| | | 6,8 (3,0) Cu | |
| | | 3,0 ppm | 152 |
| | | 6,8 ppm | 170 |

EP 0 379 041 A1

Aus Tabelle 4 geht der Einfluß der Vorbehandlung auf den Restgehalt an Metallen im gereinigten Wasser hervor.

Es zeigt sich, daß sowohl Evakuieren als auch Behandeln mit Dampf und heißem Wasser zu sehr guten Ergebnissen führen, ebenso das Einsaugen von Feinkoks und Mischen mittels einer Wasserstrahlpumpe.

Dies ist von erheblicher praktischer Bedeutung, da in großen Reinigungsapparaturen das Dämpfen und Einsaugen die am einfachsten durchzuführenden Vorbehandlungen sein dürften.

Ohne Vorbehandlung steigt nach 152 h die Restkonzentration auf 3,0 ppm an und nach 170 h auf 6,8 ppm.

Tabelle 5

| Einfluß der Verweilzeit bei Einsatz von entgastem Herdofenkoks | | | |
|---|---|---|---|
| 25 mg $Cd^{++}$ ($CdCl_2$) Korngröße 0,1 - 1,5 mm | | | |
| Versuch Nr. | Verweilzeit min. | Konzentration nach Reinigung in ppm | Versuchsdauer h |
| 37 | 60 | < 0,002 2 mg/l | 120 |
| 38 | 120 | < 0,001 | 120 |
| 39 | 30 | < 0,002 | 120 |
| 40 | 10 | < 0,02 | 120 |
| Tabelle 5 zeigt, daß nur bei kurzen Verweilzeiten von ca. 10 min. ein nennenswerter Anstieg des Restgehalts an Metallionen im gereinigten Wasser feststellbar ist. | | | |

Tabelle 6

| Einfluß des Lösungsmittels bei Einsatz von entgastem Herdofenkoks | | |
|---|---|---|
| 25 mg $Cd^{++}$ ($CdCl_2$) Korngröße 1,25 - 5 mm, Verweilzeit 60 min. | | |
| Versuch Nr. | Gew.-% | Konzentration nach Reinigung in ppm |
| 41 | 100 Wasser | < 0,002 |
| 42 | 50 Wasser 50 Methanol | < 0,002 |
| 43 | 50 Wasser 50 Aceton | < 0,002 |
| 44 | 30 Wasser 70 Ethanol | < 0,002 |
| 45 | 100 Methanol | < 0,002 |
| 46 | 50 Benzol 50 Ethanol | < 0,02 |

Tabelle 7

| Einfluß des pH im eingesetzten Abwasser bei Einsatz von entgastem Herdofenkoks und 25 mg $Cu^{++}$, Korngröße 0,1 - 1,5 mm, Verweilzeit 60 min. | | | |
|---|---|---|---|
| Versuch Nr. | pH | Konzentration nach Reinigung ppm | Versuchsdauer h |
| 47 | 3 | < 0,1 | 180 |
| 48 | 4 | < 0,1 | > 260 |
| 49 | 7 | < 0,1 | mind. 260 |
| 50 | 9 | < 0,1 | mind. 260 |

Aus Tabelle 6 geht hervor, daß auch bei Lösungsmitteln bzw. Lösungsmittelgemischen, die kein Wasser enthalten gute bis sehr gute Ergebnisse erhalten werden.

Tabelle 7 zeigt, daß der pH im eingesetzten, zu reinigenden Wasser in weiten Grenzen ohne nennenswerten Einfluß auf die erfindungsgemäßen Ergebnisse ist.

Obgleich bekannt ist, daß Braunkohle, -Kokse und -Aktivkohlen basische Komponenten enthalten, liegen die erfindungsgemäß verbleibenden Verunreinigungen überraschend weit unterhalb der Löslichkeitsprodukte der entsprechenden Metallhydroxide, bei relativ hohem pH. (Bei niedrigerem pH sind die Löslichkeitsprodukte der Metallhydroxide noch höher.)

Tabelle 8 enthält einige Angaben zu den im Wasser verbleibenden Metallionen-Konzentrationen aufgrund der Löslichkeitsprodukte.

Tabelle 8

| Versuch Nr. | Metallion | pH | im Abwasser verbleibende Metallionen-Konzentration mg/l |
|---|---|---|---|
| 51 | $Cd^{++}$ | 8 | 55 |
| 52 | $Ni^{++}$ | 8,5 | 30 |
| 53 | $Zn^{++}$ | 8 | 6 |
| 54 | $Pb^{++}$ | 8 | 37 |

In Tabelle 9 sind Ergebnisse zur Entfernung von Phosphat-Ionen insbesondere Waschmittel-Phosphaten zusammengefaßt.

Tabelle 9

| Versuch Nr. | P-Konzentr.im Einsatzwasser | P-Konzentr. nach Reinigung | Koksart |
|---|---|---|---|
| | Entfernung von Phosphat aus wässriger Lösung bei Einsatz von entgastem Koks aus Braunkohle, Korngröße 0,1 - 1,5 mm, Verweilzeit 60 min. | | |
| 55 | 8 mg/l als $PO_4^{3-}$ in Deponiesickerwasser | < 1 mg | Herdofenkoks |
| 56 | wie 55 | < 1,5 mg | Hochtemperaturkoks |
| 57 | 16 mg als Waschmittelphosphate | < 1 mg | Herdofenkoks |
| 58 | 16 mg als Waschmittelphosphate | < 1 mg | Herdofenkoks ohne vorherige Entgasung |
| 59 | 16 mg als Waschmittelphosphate | 12 mg | Steinkohlenkoks |

EP 0 379 041 A1

Die Versuche 51 bis 53 zeigen, daß mit dem erfindungsgemäßen Verfahren Phosphate weitgehend entfernt werden können.

Die Einsatzlösung bei Versuch 53 wurde durch Auflösen von Waschmittel in Wasser hergestellt.

Versuch 54 zeigt, daß auch ohne vorherige Entgasung Phosphate mit Braunkohlenkoksen mit sehr guten Ergebnissen entfernt werden können, während Steinkohlenkoks zu keiner nennenswerten Entfernung der Phosphate führt.

Die Untersuchungen der Anmelderin haben ferner ergeben, daß wie allgemein bekannt, Temperaturerhöhungen die Wirksamkeit der erfindungsgemäßen Kokse und/oder Aktivkohlen nicht günstig beeinflussen, während der Druck ohne wesentlichen Einfluß ist.

Die Darlegungen machen deutlich, daß durch die Erfindung ein neues, wirtschaftliches und sehr wirksames Verfahren zur Verfügung gestellt wird, das immer dringlichere Problem der Befreiung von Abwasser von Verunreinigungen insbesondere Metall-und Phosphatverunreinigungen auf hervorragende Weise zu lösen.

## Ansprüche

1. Verfahren zum Abtrennen von in Flüssigkeiten gelösten Ionen mit Koks und/oder Aktivkohle, dadurch gekennzeichnet, daß aus Braunkohle hergestellte(r) Koks(e) und/oder Aktivkohle(n) zur Entfernung der in der Flüssigkeit enthaltenden Ionen verwendet werden.

2. Verfahren nach Anspruch 1, dadurch gekennzeichnet, daß die Flüssigkeit Wasser ist.

3. Verfahren nach den Ansprüchen 1 und 2, dadurch gekennzeichnet, daß der Koks und/oder die Aktivkohle vor dem Einsatz entgast werden.

4. Verfahren nach den Ansprüchen 1 - 3, dadurch gekennzeichnet, daß die Entgasung durch Einsaugen von fein verteiltem Koks oder von Aktivkohle in den Wasserstrahl einer Wasserstrahlpumpe erfolgt.

5. Verfahren nach den Ansprüchen 1 - 3, dadurch gekennzeichnet, daß die Entgasung durch Behandeln mit heißem Wasser und/oder mit Dampf erfolgt.

6. Verfahren nach den Ansprüchen 1 - 5, dadurch gekennzeichnet, daß mit einer Verweilzeit von 1 - 300 min., bevorzugt von 5 - 180 min., besonders bevorzugt von 10 - 120 min. gearbeitet wird.

7. Verfahren nach den Ansprüchen 1 - 6, dadurch gekennzeichnet, daß die eingesetzten Kokse und/oder Aktivkohlen eine Korngröße von > 0 - 100 mm, bevorzugt von > 0,01 - 20 mm und besonders bevorzugt von > 0,01 - 10 mm besitzen.

8. Verfahren nach den Ansprüchen 1 - 7, dadurch gekennzeichnet, daß aus Braunkohle hergestellter Koks eingesetzt wird.

9. Verfahren nach den Ansprüchen 1 - 8, dadurch gekennzeichnet, daß aus Braunkohle hergestellter Herdofenkoks eingesetzt wird.

10. Verfahren nach den Ansprüchen 1 - 9, dadurch gekennzeichnet, daß die Reinigung von Wasser erfolgt, das wenigstens ein Metall aus der Gruppe Hg, Cd, Zn, Cu, Pb, Cr, Co, Ni, V und Mn als Kationen enthält, wobei diese Kationen entfernt werden.

11. Verfahren nach den Ansprüchen 1 - 10, dadurch gekennzeichnet, daß ein pH > 4, bevorzugt > 5 in der zu reinigenden Flüssigkeit vorliegt.

12. Verfahren nach den Ansprüchen 1 - 9, dadurch gekennzeichnet, daß die Reinigung von Wasser erfolgt, das Phosphat-Ionen, insbesondere Waschmittel-Phosphat-Ionen enthält, wobei diese Ionen entfernt werden.

13. Verwendung von Koks und/oder Aktivkohle aus Braunkohle zur Entfernung von Ionen nach den Ansprüchen 1 - 12.

14. Verwendung von Herdofenkoks aus Braunkohle zur Entfernung von Ionen nach den Ansprüchen 1 - 13.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | G.W.F.-Wasser/Abwasser<br>vol. 127, no. 6, Juni 1986, Muenchen,W.Germany<br>Seiten 275 - 282; K.-D.Henning et al:<br>"Kohlenstoffhaltige Filtermaterialien fuer die<br>Ein- und Mehrschichtfiltration"<br>* das ganze Dokument *<br>--- | 1-3,<br>5-8, 10 | C02F1/28 |
| A | US-A-4131565 (M.KOMORI ET AL)<br>* Ansprüche 1, 2 *<br>--- | 1, 5 | |
| A | US-A-4689154 (W.M.ZIMBERG)<br>* Ansprüche 1, 3, 4 *<br>--- | 1, 11,<br>12 | |
| A | US-A-4267057 (D.G.HAGER ET AL.)<br>* Ansprüche 1-3 *<br>----- | 1, 11 | |

**RECHERCHIERTE SACHGEBIETE (Int. Cl.5)**

B01D
C02D

Der vorliegende Recherchenbericht wurde für alle Patentansprüche erstellt

| Recherchenort | Abschlußdatum der Recherche | Prüfer |
|---|---|---|
| BERLIN | 05 APRIL 1990 | BERTRAM H.E.H. |